# EUROPEAN PATENT SPECIFICATION

(11) **EP 1 430 710 B1**
(45) Date of publication and mention of the grant of the patent: **14.03.2007**
(21) Application number: 02749101.8
(22) Date of filing: 31.07.2002
(51) Int. Cl.: H04N 1/62, G06T 7/00

(54) **IMAGE PROCESSING TO REMOVE RED-EYE FEATURES**
BILDVERARBEITUNG ZUM ENTFERNEN VON ROTEN AUGEN
TRAITEMENT D'IMAGE POUR SUPPRIMER LES EFFETS YEUX ROUGES

(30) Priority: 14.09.2001 GB 0122274
(43) Date of publication of application: 23.06.2004
(73) Proprietor: Pixology Software Limited, Guildford, Surrey GU2 7YS (GB)
(72) Inventor: JARMAN, Nick, Fleet, Hampshire GU52 8UG (GB)
(74) Representative: Talbot-Ponsonby, Daniel Frederick
(86) International application number: PCT/GB2002/003527
(87) International publication number: WO 2003/026278

(56) References cited:
- EP-A- 0 884 694
- EP-A- 0 911 759
- WO-A-99/17254
- US-A- 5 130 789
- US-A- 5 748 764
- US-A- 6 009 209
- US-B1- 6 252 976
- US-B1- 6 278 491
- PATENT ABSTRACTS OF JAPAN vol. 2000, no. 08, 6 October 2000 (2000-10-06) & JP 2000 134486 A (CANON INC), 12 May 2000 (2000-05-12)

## Description

This invention relates to the detection and reduction of red-eye in digital images.

The phenomenon of red-eye in photographs is well-known. When a flash is used to illuminate a person (or animal), the light is often reflected directly from the subject's retina back into the camera. This causes the subject's eyes to appear red when the photograph is displayed or printed.

Photographs are increasingly stored as digital images, typically as arrays of pixels, where each pixel is normally represented by a 24-bit value. The colour of each pixel may be encoded within the 24-bit value as three 8-bit values representing the intensity of red, green and blue for that pixel. Alternatively, the array of pixels can be transformed so that the 24-bit value consists of three 8-bit values representing "hue", "saturation" and "lightness". Hue provides a "circular" scale defining the colour, so that 0 represents red, with the colour passing through green and blue as the value increases, back to red at 255. Saturation provides a measure of the intensity of the colour identified by the hue. Lightness can be seen as a measure of the amount of illumination.

By manipulation of these digital images it is possible to reduce the effects of red-eye. Software which performs this task is well known, and generally works by altering the pixels of a red-eye feature so that their red content is reduced - in other words so that their hue is rendered less red. Normally they are left as black or dark grey instead.

Most red-eye reduction software requires the centre and radius of each red-eye feature which is to be manipulated, and the simplest way to provide this information is for a user to select the central pixel of each red-eye feature and indicate the radius of the red part. This process can be performed for each red-eye feature, and the manipulation therefore has no effect on the rest of the image. However, this requires considerable input from the user, and it is difficult to pinpoint the precise centre of each red-eye feature, and to select the correct radius. Another common method is for the user to draw a box around the red area. This is rectangular, making it even more difficult to accurately mark the feature.

There is therefore a need to identify automatically areas of a digital image to which red-eye reduction should be applied, so that red-eye reduction can be applied only where it is needed, either without the intervention of the user or with minimal user intervention.

EP-A-0911759 describes a method of detecting red-eye features by searching an image for a pixels having a red hue and marking these pixels using a binary mask. A pupil region may then be identified from the pixels marked as red.

WO 99/17254 and U5874764 each describes a method of detecting red-eye features by searching an image for pixels having the type of red observed in flash-illuminated human eyes. This involves searching for pixels having pre-set minimum and maximum hue, luminance and saturation values. Further selection criteria are then applied to determine whether the detected red pupils form part of a red-eye feature.

The present invention recognises that a typical red-eye feature is not simply a region of red pixels. A typical red-eye feature usually also includes a bright spot caused by reflection of the flashlight from the front of the eye. These bright spots are known as "highlights". If highlights in the image can be located then red-eyes are much easier to identify automatically. Highlights are usually located near the centre of red-eye features, although sometimes they lie off-centre, and occasionally at the edge.

In accordance with a first aspect of the present invention there is provided a method of detecting red-eye features in a digital image, comprising:
testing the saturation and lightness of pixels in the image, and identifying highlight regions comprising pixels which satisfy predetermined saturation and lightness criteria relative to pixels in the regions therearound, the predetermined saturation and lightness criteria being that pixels in the highlight regions must have higher saturation or lightness values or both than pixels in the regions therearound; and
determining whether each highlight region corresponds to a red-eye feature on the basis of applying further selection criteria.

The further selection criteria preferably include testing the hue of pixels surrounding the highlight region, and determining that the highlight region does not correspond to a red-eye feature if said hue is outside a predetermined range corresponding to red.

The further selection criteria may alternatively or in addition include identifying the shape of the highlight region, and determining that the highlight region does not correspond to a red-eye feature if said shape is not substantially circular.

In accordance with a second aspect of the invention there is provided a method of reducing the visual effect of red-eye features in a digital image, comprising detecting red-eye features using the method described above, and changing the hue of pixels around each highlight region to reduce the red content of those pixels.

In accordance with a third aspect of the present invention there is provided a method of processing a digital image, the method comprising:
detecting red-eye features using a method as described above; and
performing red-eye reduction on some or all of the red-eye features.

This has the advantage that the saturation/lightness contrast between highlight regions and the area surrounding them is much more marked than the colour (or "hue") contrast between the red part of a red-eye feature and the skin tones surrounding it. Furthermore, colour is encoded at a low resolution for many image compression formats such as JPEG. By using saturation and lightness to detect red-eyes it is much less likely that they will be missed than if hue is used as the basic detection tool.

It is convenient if each red-eye feature can have a unique reference point associated with it, to enable the location of the red-eye feature to be stored in a list. A single reference pixel in each highlight region may therefore be selected as the central point for the red-eye feature associated with that highlight region, and the red-eye reduction for that red-eye feature centred on the reference pixel.

As well as having high saturation and/or lightness values, the highlight of a typical red-eye feature is very sharply defined. Accordingly a highlight region is preferably only identified if there is a sharp change in pixel saturation and/or lightness between the highlight region and the regions adjacent thereto.

Although many of the identified highlight regions may result from red-eye, it is likely that some highlight regions will be identified which are not part of red-eye features, and around which a red-eye reduction should not be applied. The method therefore preferably comprises eliminating at least some of the highlight regions as possibilities for red-eye reduction. Indeed, it is possible that none of the highlight regions identified are caused by red-eye, and therefore should not have red-eye features associated with them. In this context it will be appreciated that the phrase "identifying red-eye features with some or all of said highlight regions" is intended to include the possibility that no red-eye features are associated with any of the highlight regions. Similarly, it is possible that filters applied to red-eye features determine that none of the red-eye features originally identified should have red-eye reduction applied to them, and accordingly the phrase "performing red-eye reduction on some or all of the red-eye features" includes the possibility that all red-eye features are rejected as possibilities for red-eye reduction

In practice, there is a maximum size that a red-eye feature can be, assuming that at least an entire face has been photographed. Therefore, preferably, if a highlight region exceeds a predetermined maximum diameter no red-eye feature is associated with that highlight region, and no red-eye reduction is carried out.

Red-eye features are generally substantially circular. Therefore linear highlight features will in general not be due to red-eye, and therefore preferably no red-eye reduction is performed on a feature associated with a highlight region if that highlight region is substantially linear.

Red-eye reduction is preferably not carried out on any red-eye features which overlap each other.

Once the highlight regions have been determined, it is convenient to identify the hue of pixels in the region surrounding each highlight region, and only perform red-eye reduction for a red-eye feature associated with a highlight region if the hue of the pixels surrounding that highlight region contains more than a predetermined proportion of red. The radius of the red-eye feature can then be determined from this region of red pixels surrounding the highlight region. Red-eye reduction is preferably only performed on a red-eye feature if the ratio of radius of the red-eye region to the radius of the highlight region falls within a predetermined range of values. For a typical red-eye feature, the radius of the red-eye region will be up to 8 times the radius of the highlight region.

Preferably, assuming that the digital image is derived from a photograph, it is determined whether a flash was fired when the photograph was taken, and highlight regions are not identified or red-eye reduction performed if no flash was fired.

It is preferably determined whether the digital image is monochrome, and, if so, highlight regions are not identified or red-eye reduction performed.

In some cases, for example in portrait photography, the user may know in advance that all highlights will be caused by red-eye, in which case a red-eye feature may be associated with each highlight region identified, and red-eye reduction may be carried out on all red-eye features.

The invention also provides a digital image to which the method described above has been applied, apparatus arranged to perform the method, and a computer storage medium having stored thereon a computer program arranged to perform the method.

Some preferred embodiments of the invention will now be described by way of example only and with reference to the accompanying drawings, in which:
Figure 1 is a flowchart describing a general procedure for reducing red-eye;
Figure 2 is a schematic diagram showing a typical red-eye feature;
Figure 3 shows the red-eye feature of Figure 2, showing pixels identified in the detection of a highlight;
Figure 4 shows the red-eye feature of Figure 2 after measurement of the radius; and
Figure 5 is a flowchart describing a procedure for detecting red-eye features.

When processing a digital image which may or may not contain red-eye features, in order to correct for such features as efficiently as possible, it is useful to apply a filter to determine whether such features could be present, find the features, and apply a red-eye correction to those features, preferably without the intervention of the user.

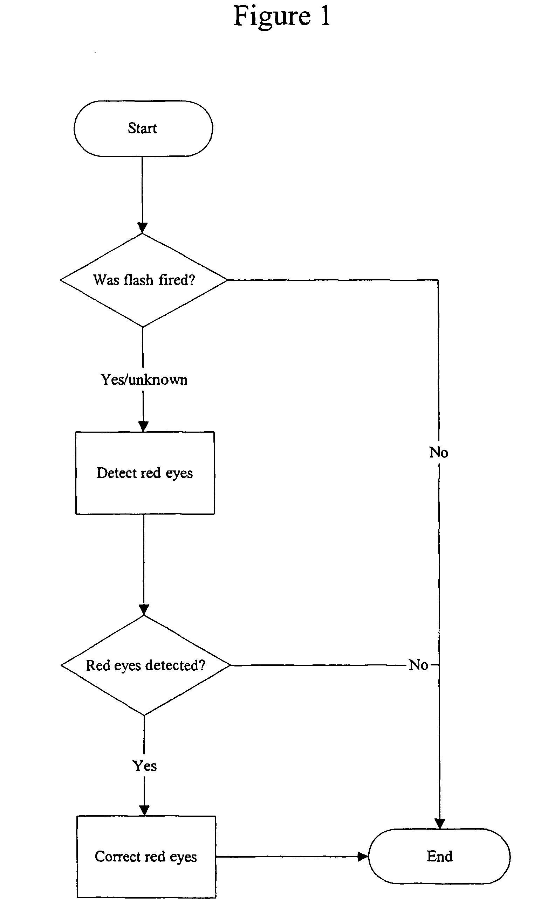

In its very simplest form, an automatic red-eye filter can operate in a very straightforward way. Since red-eye features can only occur in photographs in which a flash was used, no red-eye reduction need be applied if no flash was fired. However, if a flash was used, or if there is any doubt as to whether a flash was used, then the image should be searched for features resembling red-eye. If any red-eye features are found, they are corrected. This process is shown in Figure 1.

An algorithm putting into practice the process of Figure 1 begins with a quick test to determine whether the image could contain red-eye: was the flash fired? If this question can be answered 'No' with 100% certainty, the algorithm can terminate; if the flash was not fired, the image cannot contain red-eye. Simply knowing that the flash did not fire allows a large proportion of images to be filtered with very little processing effort.

There are a number of possible ways of determining whether the flash was fired. One method involves asking the user, although this is not ideal because it involves user interaction, and the user may not be able to answer the question reliably.

Another alternative involves looking in the image metadata. For example, an EXIF format JPEG has a 'flash fired - yes/no' field. This provides a certain way of determining whether the flash was fired, but not all images have the correct metadata. Metadata is usually lost when an image is edited. Scanned images containing red-eye will not have appropriate metadata.

There is an additional method of determining if the flash was fired, which is appropriate if the algorithm is implemented in the controlling software of a digital camera. The module responsible for taking the picture could indicate to the red-eye detection/correction module that the flash was fired.

For any image where it cannot be determined for certain that the flash was not fired, a more detailed examination must be performed using the red-eye detection module described below.

If no red-eye features are detected, the algorithm can end without needing to modify the image. However, if red-eye features are found, each must be corrected using the red-eye correction module described below.

Once the red-eye correction module has processed each red-eye feature, the algorithm ends.

The output from the algorithm is an image where all detected occurrences of red-eye have been corrected. If the image contains no red-eye, the output is an image which looks substantially the same as the input image. It may be that the algorithm detected and 'corrected' features on the image which resemble red-eye closely, but it is quite possible that the user will not notice these erroneous 'corrections'.

The red-eye detection module will now be described.

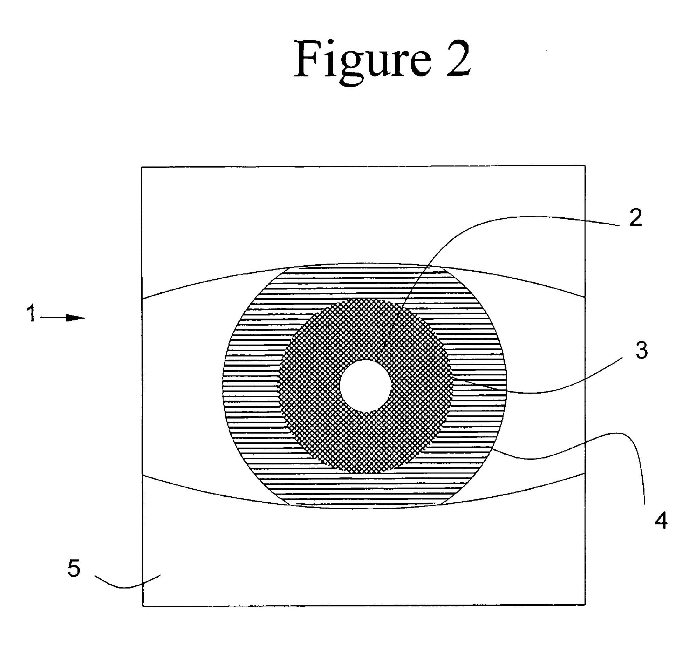

Figure 2 is a schematic diagram showing a typical red-eye feature 1. At the centre of the feature 1 is a white or nearly white "highlight" 2, which is surrounded by a region 3 corresponding to the subject's pupil. In the absence of red-eye, this region 3 would normally be black, but in a red-eye feature this region 3 takes on a reddish hue. This can range from a dull glow to a bright red. Surrounding the pupil region 3 is the iris 4, some or all of which may appear to take on some of the red glow from the pupil region 3.

The detection algorithm must locate the centre of each red-eye feature and the extent of the red area around it.

The red-eye detection algorithm begins by searching for regions in the image which could correspond to highlights 2 of red-eye features. The image is first transformed so that the pixels are represented by hue, saturation and lightness values. Most of the pixels in the highlight 2 of a red-eye feature 1 have a very high saturation, and it is unusual to find areas this saturated elsewhere on facial pictures. Similarly, most red-eye highlights 2 will have high lightness values. It is also important to note that not only will the saturation and lightness values be high, but also they will be significantly higher than the regions 3, 4, 5 immediately surrounding them. The change in saturation from the red pupil region 3 to the highlight region 2 is very abrupt.

The highlight detection algorithm scans each row of pixels in the image, looking for small areas of light, highly saturated pixels. During the scan, each pixel is compared with its preceding neighbour (the pixel to its left). The algorithm searches for an abrupt increase in saturation and lightness, marking the start of a highlight, as it scans from the beginning of the row. This is known as a "rising edge". Once a rising edge has been identified, that pixel and the following pixels (assuming they have a similarly high saturation and lightness) are recorded, until an abrupt drop in saturation is reached, marking the other edge of the highlight. This is known as a "falling edge". After a falling edge, the algorithm returns to searching for a rising edge marking the start of the next highlight.

A typical algorithm might be arranged so that a rising edge is detected if:
1. The pixel is highly saturated (saturation > 128).
2. The pixel is significantly more saturated than the previous one (this pixel's saturation - previous pixel's saturation > 64).
3. The pixel has a high lightness value (lightness > 128).

The rising edge is located on the pixel being examined. A falling edge is detected if:
1. The pixel is significantly less saturated than the previous one (previous pixel's saturation - this pixel's saturation > 64).
2. The previous pixel has a high lightness value (lightness > 128).

The falling edge is located on the pixel preceding the one being examined.

An additional check is performed while searching for the falling edge. After a defined number of pixels (for example 10) have been examined without finding a falling edge, the algorithm gives up looking for the falling edge. The assumption is that there is a maximum size that a highlight in a red-eye feature can be - obviously this will vary depending on the size of the picture and the nature of its contents (for example, highlights will be smaller in group photos than individual portraits at the same resolution). The algorithm may determine the maximum highlight width dynamically, based on the size of the picture and the proportion of that size which is likely to be taken up by a highlight (typically between 0.25% and 1% of the picture's largest dimension).

If a highlight is successfully detected, the co-ordinates of the rising edge, falling edge and the central pixel are recorded.

The algorithm is as follows:

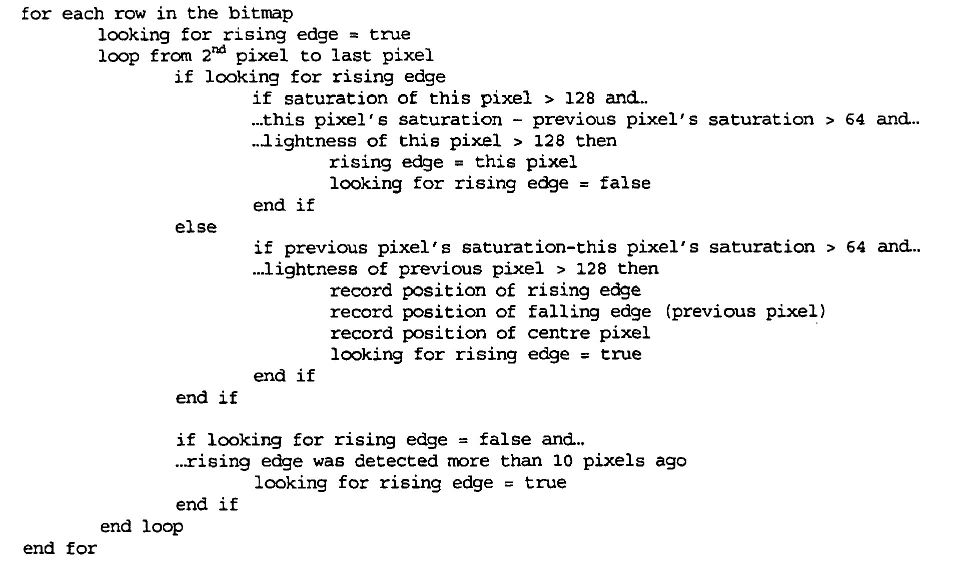

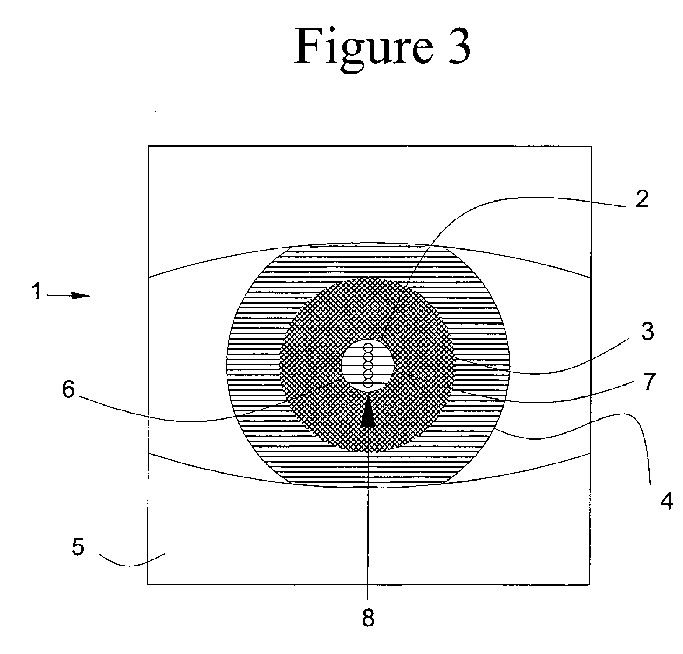

The result of this algorithm on the red-eye feature 1 is shown in Figure 3. For this feature, since there is a single highlight 2, the algorithm will record one rising edge 6, one falling edge 7 and one centre pixel 8 for each row the highlight covers. The highlight 2 covers five rows, so five central pixels 8 are recorded. In Figure 3, horizontal lines stretch from the pixel at the rising edge to the pixel at the falling edge. Circles show the location of the central pixels 8.

The location of all of these central pixels are recorded into a list of highlights which may potentially be caused by red-eye. The number of central pixels 8 in each highlight is then reduced to one. As shown in Figure 3, there is a central pixel 8 for each row covered by the highlight 2. This effectively means that the highlight has been detected five times, and will therefore need more processing than is really necessary. It is therefore desirable to eliminate from the list all but the vertically central point from the list of highlights.

Not all of the highlights identified by the algorithm above will necessarily be formed by red-eye features. Others could be formed, for example, by light reflected from corners or edges of objects. The next stage of the process therefore attempts to eliminate such highlights, so that red-eye reduction is not performed on features which are not actually red-eye features.

There are a number of criteria which can be applied to recognise red-eye features as opposed to false features. One is to check for long strings of central pixels in narrow highlights - i.e. highlights which are essentially linear in shape. These may be formed by light reflecting off edges, for example, but will never be formed by red-eye.

This check for long strings of pixels may be combined with the reduction of central pixels to one. An algorithm which performs both these operations simultaneously may search through highlights identifying "strings" or "chains" of central pixels. If the aspect ratio, which is defined as the length of the string of central pixels 8 (see Figure 3) divided by the largest width between the rising edge 6 and falling edge 7 of the highlight, is greater than a predetermined number, and the string is above a predetermined length, then all of the central pixels 8 are removed from the list of highlights. Otherwise only the central pixel of the string is retained in the list of highlights.

In other words, the algorithm performs two tasks:
- removes roughly vertical chains of highlights from the list of highlights, where the aspect ratio of the chain is greater than a predefined value, and
- removes all but the vertically central highlight from roughly vertical chains of highlights where the aspect ratio of the chain is less than or equal to a pre-defined value.

An algorithm which performs this combination of tasks is given below:

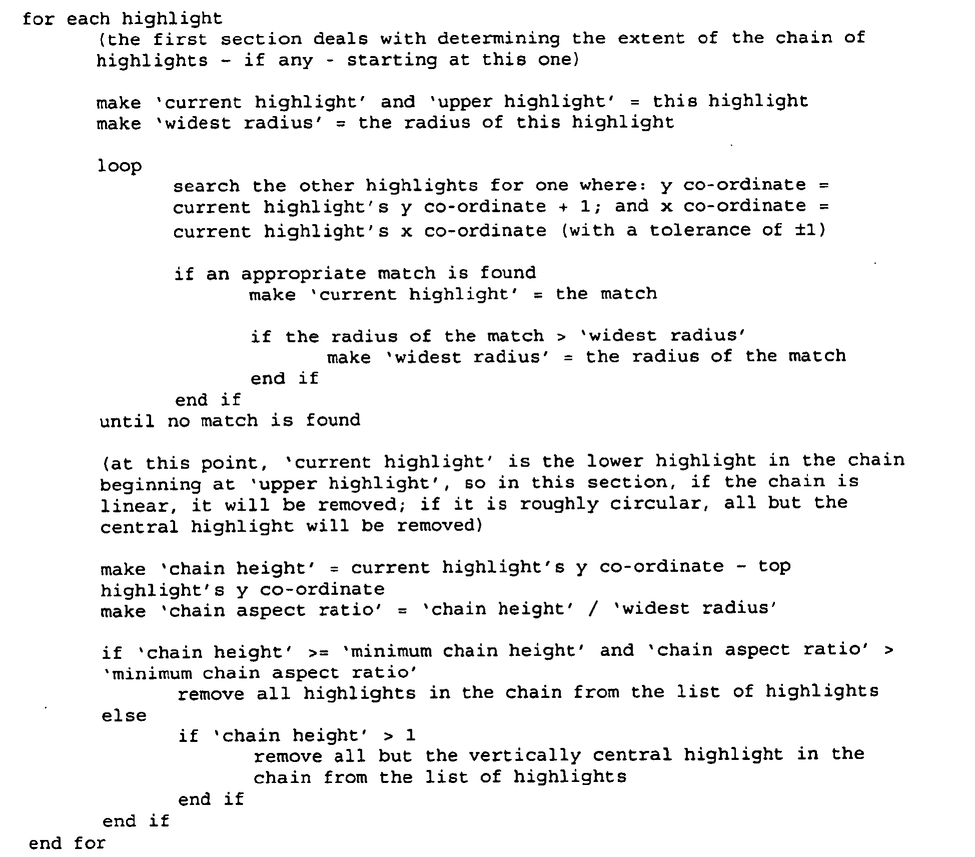

A suitable threshold for 'minimum chain height' is three and a suitable threshold for 'minimum chain aspect ratio' is also three, although it will be appreciated that these can be changed to suit the requirements of particular images.

Another criterion involves checking the hue of the pixels in the pupil region 3 around the highlight. If the pixels in this region contain less than a certain proportion of red then the feature cannot be red-eye. A suitable filter to apply to the pupil region 3 is that unless the saturation is greater than or equal to 80 and the hue between 0 and 10, or between 220 and 255 (both inclusive) for 45% of the pixels around the highlight, then no red-eye reduction is performed on that feature.

The radius of the pupil region must then be established so that the extent of the red-eye feature is known, so that red-eye reduction can be performed. A suitable algorithm iterates through each highlight, roughly determining the radius of the red area which surrounds it. Once the algorithm has been completed, all highlights have an additional piece of information associated with them: the radius of the red-eye region. Therefore, while the input to the algorithm is a series of highlights, the output can be considered to be a series of red-eye features.

The output may contain fewer red-eye regions than input highlights. In general, the ratio of the radius of the pupil region 2 to the radius of the highlight region 3 will always fall within a certain range. If the ratio falls outside this range then it is unlikely that the feature being examined is due to red-eye. In the algorithm described, if the radius of the pupil region 3 is more than eight times the radius of the highlight 2, the feature is judged not to be a red-eye feature, so it is removed from the list of areas to correct. This ratio has been determined by analysing a number of pictures, but it will be appreciated that it may be possible to choose a different ratio to suit particular circumstances.

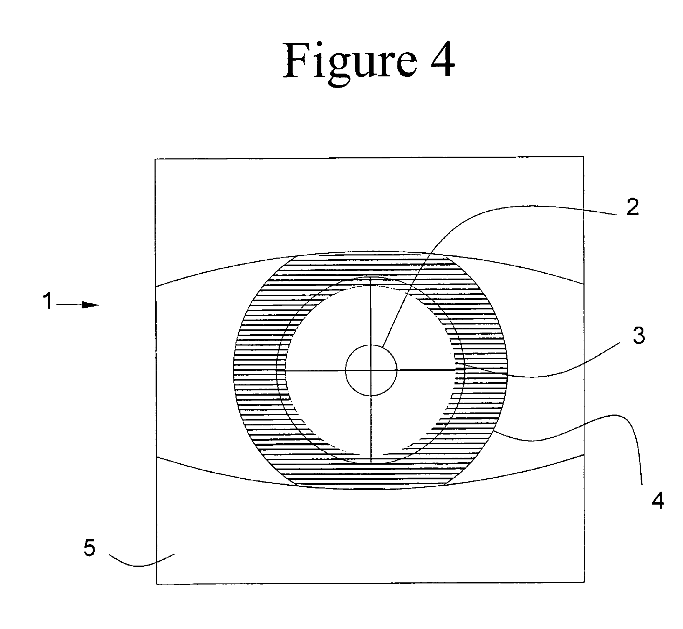

The method of determining the radius of the red area errs towards larger radii (because it only uses hue data, and does not take into account saturation or lightness) - in other words, it calculates the area to be slightly larger than it actually is, meaning that it should contain all red pixels, plus some peripheral non-red ones, as shown in Figure 4. This is not a limitation as long as the method used for correcting the red-eye does not attempt to adjust non-red pixels. The slightly excessive size is also useful in the described embodiment, where no attempt is made to accurately determine the position of the highlight within the red-eye region: the implementation of the embodiment assumes it is central, whereas this may not always be the case.

A suitable algorithm is given below:

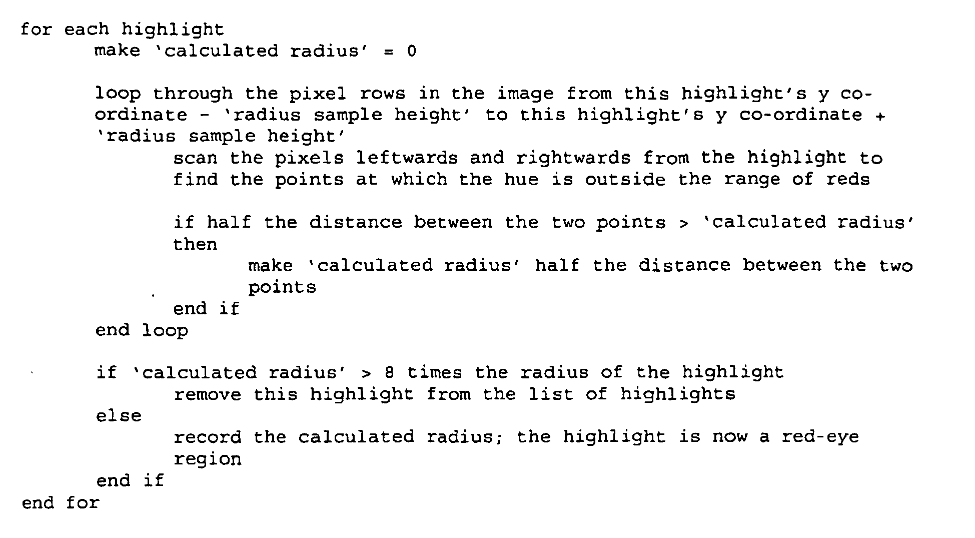

It will be appreciated that this algorithm determines the radius of the red-eye feature by searching horizontally along rows of pixels centred on the highlight (which is defined as the central pixel 8 in a vertical row, as described above). The skilled person would be able to modify the algorithm to search radially from the highlight, or to determine the shape and extent of the red area surrounding the highlight.

Once the radii of red-eye features have been determined, a search can be made for overlapping features. If the red pupil region 3 overlaps with another red pupil region 3 around a highlight, then neither feature can be due to red-eye. Such features can therefore be discarded.

An algorithm to perform this task proceeds in two stages. The first iterates through all red-eye regions. For each red-eye region, a search is made until one other red-eye region is found which overlaps it. If an overlap is found, both red-eye regions are marked for deletion. It is not necessary to determine whether the red-eye region overlaps with more than one other.

The second stage deletes all red-eye regions which have been marked for deletion. Deletion must be separated from overlap detection because if red-eye regions were deleted as soon as they were determined to overlap, it could clear overlaps with other red-eye regions which had not yet been detected.

The algorithm is as follows:

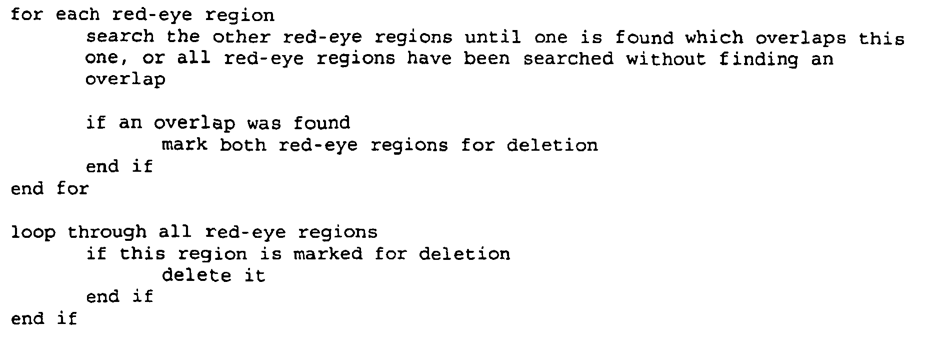

Two red-eye regions are judged to overlap if the sum of their radii is greater than the distance between their centres.

An alternative way of achieving the same effect as the algorithm above is to create a new list of red-eye features containing only those regions which do not overlap. The original list of red eye features can then be discarded and the new one used in its place.

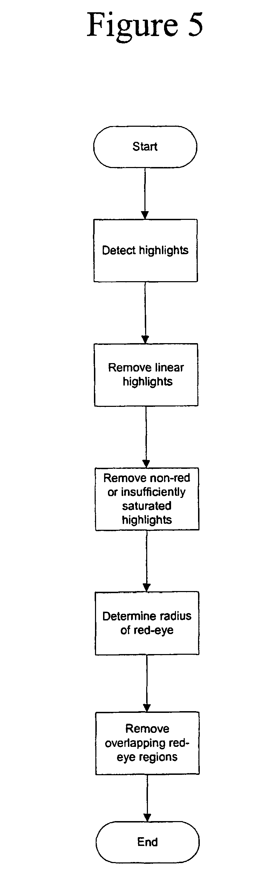

The overall detection process is shown as a flow chart in Figure 5.

Red-eye reduction is then carried out on the detected red-eye features. There are a number of known methods for performing this, and a suitable process is now described. The process described is a very basic method of correcting red-eye, and the skilled person will recognise that there is scope for refinement to achieve better results, particularly with regard to softening the edges of the corrected area and more accurately determining the extent of the red-eye region.

There are two parts to the red-eye correction module: the controlling loop and the red-eye corrector itself. The controlling loop simply iterates through the list of red-eye regions generated by the red-eye detection module, passing each one to the red-eye corrector:

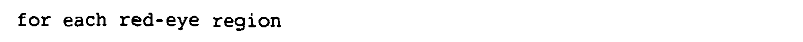

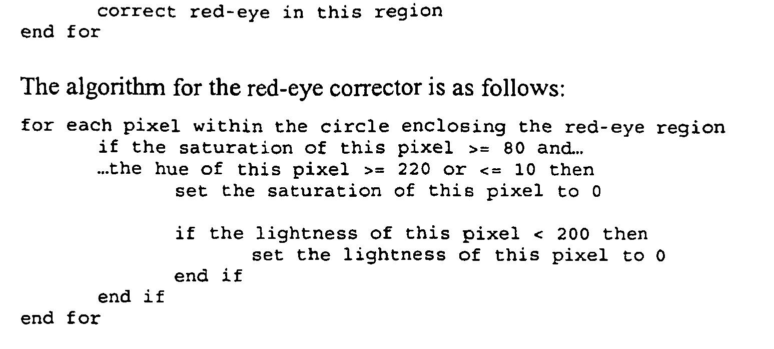

For each pixel, there are two very straightforward checks, each with a straightforward action taken as a consequence:
1. If the pixel is of medium or high saturation , and if the hue of the pixel is within the range of reds, the pixel is de-saturated entirely. In other words, saturation is set to "0" which causes red pixels to become grey.
2. Furthermore, if the pixel is dark or of medium lightness, turn it black. In most cases, this actually cancels out the adjustment made as a result of the first check: most pixels in the red-eye region will be turned black. Those pixels which are not turned black are the ones in and around the highlight. These will have had any redness removed from them, so the result is an eye with a dark black pupil and a bright white highlight.

A feature of the correction method is that its effects are not cumulative: after correction is applied to an area, subsequent corrections to the same area will have no effect. This would be a desirable feature if the red-eye detection module yielded a list of potentially overlapping red-eye regions (for example, if the multiple highlight detections were not eliminated). However, because overlapping red-eye regions are specifically removed, the non-cumulative nature of the correction module is not important to the current implementation.

It will be appreciated that the detection module and correction module can be implemented separately. For example, the detection module could be placed in a digital camera or similar, and detect red-eye features and provide a list of the location of these features when a photograph is taken. The correction module could then be applied after the picture is downloaded from the camera to a computer.

The method according to the invention provides a number of advantages. It works on a whole image, although it will be appreciated that a user could select part of an image to which red-eye reduction is to be applied, for example just a region containing faces. This would cut down on the processing required. If a whole image is processed, no user input is required. Furthermore, the method does not need to be perfectly accurate. If red-eye reduction is performed around a highlight not caused by red-eye, it is unlikely that a user would notice the difference.

Since the red-eye detection algorithm searches for light, highly saturated points before searching for areas of red, the method works particularly well with JPEG-compressed images and other formats where colour is encoded at a low resolution.

It will be appreciated that variations from the above described embodiments may still fall within the scope of the invention. For example, the method has been described with reference to people's eyes, for which the reflection from the retina leads to a red region. For some animals, "red-eye" can lead to green or yellow reflections. The method according to the invention may be used to correct for this effect. Indeed, the search for a light, saturated region rather than a region of a particular hue makes the method of the invention particularly suitable for detecting non-red animal "red-eye".

Furthermore, the method has been described for red-eye features in which the highlight region is located exactly in the centre of the red pupil region. However the method will still work for red-eye features whose highlight region is off-centre, or even at the edge of the red region.

Some red-eye features do not have a discrete highlight region, but in these features the whole of the red pupil region has high saturation and lightness values. In such cases the red-eye feature and the highlight region will be the same size, and there may not be any further red part outside the highlight region. In other words, the highlight region 2 and red pupil region 3 will occupy the same area. However, the method described above will still detect such regions as "highlights", with each red region 3 being identified as having the same radius as the highlight. Such features will therefore still be detected using the method according to the invention.

## Claims

1. A method of detecting red-eye features in a digital image, comprising:
testing the saturation and lightness of pixels in the image and identifying highlight regions (2); and
determining whether each highlight region corresponds to a red-eye feature (1) on the basis of applying further selection criteria;
**characterised in that** the highlight regions contain pixels which satisfy predetermined saturation and lightness criteria relative to pixels in the regions therearound, the predetermined saturation and lightness criteria being that pixels in the highlight regions must have a significantly higher saturation or significantly higher lightness or both than pixels in the regions therearound; the change in saturation and/or lightness from said highlight regions to the regions there around being very abrupt.

2. A method as claimed in claim 1, wherein the further selection criteria include testing the hue of pixels (3) surrounding the highlight region (2), and determining that the highlight region does not correspond to a red-eye feature if said hue is outside a predetermined range corresponding to red.

3. A method as claimed in claim 1 or 2, wherein said further selection criteria include identifying the shape of the highlight region (2), and determining that the highlight region does not correspond to a red-eye feature (1) if said shape is not substantially circular.

4. A method of reducing the visual effect of red-eye features in a digital image, comprising:
detecting red-eye features (1) using the method of claim 1, 2 or 3, and
changing the hue of pixels (3) around each highlight region to reduce the red content of those pixels.

5. A method of processing a digital image, comprising:
detecting red-eye features (1) using a method as claimed in claim 1, 2 or 3, and
performing red-eye reduction on some or all of the red-eye features.

6. A method as claimed in claim 5, wherein a single reference pixel (8) in each highlight region (2) is selected as the central point of an associated red-eye feature (1), and red-eye reduction for that red-eye feature is centred on the reference pixel.

7. A method as claimed in claim 5 or 6, further comprising eliminating at least some of the highlight regions (2) as possibilities for red-eye reduction.

8. A method as claimed in any of claims 5 to 7, wherein the red-eye reduction on a red-eye feature (1) is not carried out if the highlight region (2) associated with that red-eye feature exceeds a predetermined maximum diameter.

9. A method as claimed in any of claims 5 to 8, further comprising determining whether each highlight region (2) is substantially linear, and not associating a red-eye feature (1) with a highlight region if that highlight region is substantially linear.

10. A method as claimed in any of claims 5 to 9, wherein red-eye reduction is not carried out centred on any red-eye features (1) which overlap each other.

11. A method as claimed in any of claims 5 to 10 further comprising identifying the hue of pixels in the region (3) surrounding the highlight region (2) for each red-eye feature (1), and only performing red-eye reduction if the pixels in said region contain more than a predetermined proportion of red.

12. A method as claimed in claim 7, further comprising determining the radius of the red-eye region (1) around each highlight region (2), the red-eye region having pixels with a hue containing more than said predetermined proportion of red.

13. A method as claimed in claim 8, wherein red-eye reduction is only performed on a red-eye feature (1) if the ratio of radius of the red-eye region to the radius of the highlight region (2) falls within a predetermined range of values.

14. A method as claimed in any preceding claim, wherein the digital image is derived from a photograph, the method further comprising determining whether a flash was fired when the photograph was taken, and not identifying highlight regions (2) or performing red-eye reduction if no flash was fired.

15. A method as claimed in any preceding claim, further comprising determining whether the digital image is monochrome, and not identifying highlight regions or performing red-eye reduction if the digital image is monochrome.

16. A method as claimed in claim 5 or 6 wherein a red-eye feature is associated with each highlight region identified, and red-eye reduction is carried out on all red-eye features.

17. Apparatus arranged to perform the method of any of claims 1 to 16.

18. A computer storage medium having stored thereon a computer program arranged to perform the method of any of claims 1 to 16.

## Patentansprüche

1. Verfahren zum Detektieren von Rote-Augen-Merkmalen in einem Digitalbild, umfassend:
Prüfen der Sättigung und Helligkeit von Pixeln im Bild und Identifizieren von Hochlichtbereichen (2); und
Bestimmen, ob jeder Hochlichtbereich einem Rote-Augen-Merkmal (1) entspricht, davon ausgehend, dass weitere Auswahlkriterien angewendet werden;
**dadurch gekennzeichnet, dass** die Hochlichtbereiche Pixel enthalten, die relativ zu Pixeln in den umgebenden Bereichen vorbestimmte Sättigungs- und Helligkeitskriterien erfüllen, wobei die vorbestimmten Sättigungs- und Helligkeitskriterien darin bestehen, dass Pixel in den Hochlichtbereichen eine wesentlich höhere Sättigung oder wesentlich höhere Helligkeit oder beides haben müssen als Pixel in den umgebenden Bereichen; wobei die Änderung der Sättigung und/oder Helligkeit von den Hochlichtbereichen zu den umgebenden Bereichen sehr abrupt ist.

2. Verfahren nach Anspruch 1, worin die weiteren Auswahlkriterien die Prüfung des Farbtons der den Hochlichtbereich (2) umgebenden Pixel (3) umfassen und die Bestimmung, dass der Hochlichtbereich keinem Rote-Augen-Merkmal entspricht, falls der Farbton außerhalb eines der Farbe Rot entsprechenden vorbestimmten Bereichs liegt.

3. Verfahren nach Anspruch 1 oder 2, worin die weiteren Auswahlkriterien die Identifikation der Form des Hochlichtbereichs (2) umfassen und die Bestimmung, dass der Hochlichtbereich keinem Rote-Augen-Merkmal (1) entspricht, falls die Form nicht im Wesentlichen kreisförmig ist.

4. Verfahren zum Reduzieren des visuellen Effekts von Rote-Augen-Merkmalen in einem Digitalbild, umfassend:
Detektieren von Rote-Augen-Merkmalen (1) unter Verwendung des Verfahrens nach Anspruch 1, 2 oder 3; und
Ändern des Farbtons der jeden Hochlichtbereich umgebenden Pixel (3), um den Rotanteil dieser Pixel zu reduzieren.

5. Verfahren zum Verarbeiten eines Digitalbilds, umfassend:
Detektieren von Rote-Augen-Merkmalen (1) unter Verwendung eines Verfahrens nach Anspruch 1, 2 oder 3 und
Ausführen der Rote-Augen-Reduktion für einige oder alle der Rote-Augen-Merkmale.

6. Verfahren nach Anspruch 5, worin ein einzelnes Bezugspixel (8) in jedem Hochlichtbereich (2) als der Mittelpunkt eines assoziierten Rote-Augen-Merkmals (1) ausgewählt wird, und die Rote-Augen-Reduktion für dieses Rote-Augen-Merkmal auf dem Bezugspixel zentriert wird.

7. Verfahren nach Anspruch 5 oder 6, außerdem die Elimination von mindestens einigen der Hochlichtbereiche (2) als Möglichkeiten für Rote-Augen-Reduktion umfassend.

8. Verfahren nach einem der Ansprüche 5 bis 7, worin die Rote-Augen-Reduktion für ein Rote-Augen-Merkmal (1) nicht ausgeführt wird, falls der Durchmesser des mit diesem Rote-Augen-Merkmal assoziierten Hochlichtbereichs (2) ein vorbestimmtes Maximum überschreitet.

9. Verfahren nach einem der Ansprüche 5 bis 8, das außerdem die Bestimmung umfasst, ob jeder Hochlichtbereich (2) im Wesentlichen linear ist, und kein Rote-Augen-Merkmal (1) mit einem Hochlichtbereich assoziiert, falls dieser Hochlichtbereich im Wesentlichen linear ist.

10. Verfahren nach einem der Ansprüche 5 bis 9, worin die Rote-Augen-Reduktion nicht auf sich überlappende Rote-Augen-Merkmale (1) zentriert ausgeführt wird.

11. Verfahren nach einem der Ansprüche 5 bis 10, das außerdem die Identifikation des Farbtons von Pixeln im den Hochlichtbereich (2) umgebenden Bereich (3) für jedes Rote-Augen-Merkmal (1) umfasst und Rote-Augen-Reduktion nur dann ausführt, falls die Pixel in diesem Bereich mehr als einen vorbestimmten Rotanteil enthalten.

12. Verfahren nach Anspruch 7, das außerdem das Bestimmen des Radius des Rote-Augen-Bereichs (1) um jeden Hochlichtbereich (2) umfasst, wobei der Rote-Augen-Bereich Pixel mit einem Farbton aufweist, der mehr als den vorbestimmten Rotanteil enthält.

13. Verfahren nach Anspruch 8, worin Rote-Augen-Reduktion für ein Rote-Augen-Merkmal (1) nur dann ausgeführt wird, falls das Verhältnis des Radius des Rote-Augen-Bereichs zum Radius des Hochlichtbereichs (2) in einen vorbestimmten Wertebereich fällt.

14. Verfahren nach einem der vorhergehenden Ansprüche, worin das Digitalbild von einer Fotografie abgeleitet ist, wobei das Verfahren außerdem Folgendes umfasst: zu ermitteln, ob beim Aufnehmen der Fotografie geblitzt wurde, und die Identifikation von Hochlichtbereichen (2) oder die Ausführung der Rote-Augen-Reduktion zu unterlassen, falls nicht geblitzt wurde.

15. Verfahren nach einem der vorhergehenden Ansprüche, außerdem Folgendes umfassend: zu ermitteln, ob das Digitalbild monochrom ist, und die Identifikation von Hochlichtbereichen oder die Ausführung der Rote-Augen-Reduktion zu unterlassen, falls das Digitalbild monochrom ist.

16. Verfahren nach Anspruch 5 oder 6, worin ein Rote-Augen-Merkmal mit jedem identifizierten Hochlichtbereich assoziiert ist und Rote-Augen-Reduktion für alle Rote-Augen-Merkmale ausgeführt wird.

17. Vorrichtung, zum Ausführen des Verfahrens nach einem der Ansprüche 1 bis 16 angeordnet.

18. Computerspeichermedium mit einem darauf abgespeicherten Computerprogramm, das zum Ausführen des Verfahrens nach einem der Ansprüche 1 bis 16 eingerichtet ist.

## Revendications

1. Procédé de détection d'effets yeux rouges dans une image numérique, comprenant:
le test de la saturation et de la luminosité de pixels dans l'image et l'identification de régions suréclairées (2); et
la détermination de si chaque région suréclairée correspond à un effet yeux rouges (1) sur la base de l'application d'autres critères de sélection,
**caractérisé en ce que** les régions suréclairées contiennent des pixels qui satisfont des critères de saturation et de luminosité prédéterminés par rapport à des pixels dans les régions au voisinage, les critères de saturation et de luminosité prédéterminés consistant en ce que des pixels dans les régions suréclairées doivent présenter une saturation significativement plus élevée ou une luminosité significativement plus élevée ou les deux que les pixels dans les régions au voisinage; et la modification de saturation et/ou de luminosité depuis lesdites régions suréclairées jusqu'aux régions au voisinage étant très brutale.

2. Procédé selon la revendication 1, dans lequel les autres critères de sélection incluent le test de la nuance de pixels (3) entourant la région suréclairée (2) et la détermination du fait que la région suréclairée ne correspond pas à un effet yeux rouges si ladite nuance est à l'extérieur d'une plage déterminée correspondant au rouge.

3. Procédé selon la revendication 1 ou 2, dans lequel lesdits autres critères de sélection incluent l'identification de la forme de la région suréclairée (2) et la détermination du fait que la région suréclairée ne correspond pas à un effet yeux rouges (1) si ladite forme n'est pas sensiblement circulaire.

4. Procédé de réduction de l'effet visuel d'effets yeux rouges dans une image numérique, comprenant:
la détection d'effets yeux rouges (1) en utilisant le procédé de la revendication 1, 2 ou 3; et
la modification de la nuance de pixels (3) autour de chaque région suréclairée afin de réduire la proportion de rouge de ces pixels.

5. Procédé de traitement d'une image numérique, comprenant:
la détection d'effets yeux rouges (1) en utilisant un procédé selon la revendication 1, 2 ou 3 et la réduction des yeux rouges sur certains ou tous les effets yeux rouges.

6. Procédé selon la revendication 5, dans lequel un unique pixel de référence (8) dans chaque région suréclairée (2) est sélectionné en tant que point central d'un effet yeux rouges associé (1) et une réduction des yeux rouges pour cet effet yeux rouges est centrée sur le pixel de référence.

7. Procédé selon la revendication 5 ou 6, comprenant en outre l'élimination d'au moins certaines régions suréclairées (2) en tant que possibilités pour une réduction des yeux rouges.

8. Procédé selon l'une quelconque des revendications 5 à 7, dans lequel la réduction des yeux rouges sur un effet yeux rouges (1) n'est pas mise en oeuvre si la région suréclairée (2) qui est associée à cet effet yeux rouges excède un diamètre maximum prédéterminé.

9. Procédé selon l'une quelconque des revendications 5 à 8, comprenant en outre la détermination de si chaque région suréclairée (2) est sensiblement linéaire et la non association d'un effet yeux rouges (1) à une région suréclairée si cette région suréclairée est sensiblement linéaire.

10. Procédé selon l'une quelconque des revendications 5 à 9, dans laquelle une réduction des yeux rouges n'est pas réalisée centrée sur de quelconques effets yeux rouges (1) qui se chevauchent les unes les autres.

11. Procédé selon l'une quelconque des revendications 5 à 10, comprenant en outre l'identification de la nuance de pixels dans la région (3) entourant la région suréclairée (2) pour chaque effet yeux rouges (1) et la réalisation seulement d'une réduction des yeux rouges si les pixels dans ladite région contiennent plus d'une proportion prédéterminée de rouge.

12. Procédé selon la revendication 7, comprenant en outre la détermination du rayon de la région des yeux rouges (1) autour de chaque région suréclairée (2), la région des yeux rouges comportant des pixels présentant une nuance contenant plus que ladite proportion prédéterminée de rouge.

13. Procédé selon la revendication 8, dans lequel une réduction des yeux rouges est seulement réalisée sur un effet yeux rouges (1) si le rapport du rayon de la région des yeux rouges sur le rayon de la région suréclairée (2) tombe à l'intérieur d'une plage de valeurs prédéterminée.

14. Procédé selon l'une quelconque des revendications précédentes, dans lequel l'image numérique est dérivée à partir d'une photographie, le procédé comprenant en outre la détermination de si oui ou non un flash a été activé lorsque la photographie a été prise et la non identification de régions suréclairées (2) ou la non réalisation d'une réduction des yeux rouges si aucun flash n'a été activé.

15. Procédé selon l'une quelconque des revendications précédentes, comprenant en outre la détermination de si oui ou non l'image numérique est monochrome et la non identification de régions suréclairées ou la non réalisation d'une réduction des yeux rouges si l'image numérique est monochrome.

16. Procédé selon la revendication 5 ou 6, dans lequel un effet yeux rouges est associé à chaque région suréclairée identifiée et une réduction des yeux rouges est réalisée sur tous les effets yeux rouges.

17. Appareil agencé pour réaliser le procédé selon l'une quelconque des revendications 1 à 16.

18. Support de mémoire d'ordinateur comportant mémorisé sur lui un programme d'ordinateur qui est agencé pour réaliser le procédé selon l'une quelconque des revendications 1 à 16.
